# EUROPEAN PATENT SPECIFICATION

(11) **EP 3 467 709 B1**
(45) Date of publication and mention of the grant of the patent: **29.04.2020**
(21) Application number: 18198611.8
(22) Date of filing: 04.10.2018
(51) Int. Cl.: G06K 9/00, G06K 9/46

(54) **FACE RECOGNITION SYSTEM FOR PERSONAL IDENTIFICATION AND AUTHENTICATION**
GESICHTSERKENNUNGSSYSTEM ZUR PERSÖNLICHEN IDENTIFIZIERUNG UND AUTHENTIFIZIERUNG
SYSTÈME D'IDENTIFICATION ET D'AUTHENTIFICATION PERSONNELLES

(30) Priority: 09.10.2017 US 201715727717; 11.10.2017 US 201715808910
(43) Date of publication of application: 10.04.2019
(73) Proprietor: Hampen Technology Corporation Limited, New Territories, Hong Kong (HK)
(72) Inventor: CHOW, Felix, Hong Kong (HK); NG, Chiu Wa, Hong Kong (HK); YIP, Chun Ho, Hong Kong (HK); LAU, How Chun, Hong Kong (HK); ZHENG, Shan Shan, Hong Kong (CN)
(74) Representative: de Arpe Fernandez, Manuel

(56) References cited:
- US-A1- 2016 071 275
- WEN DI ET AL: "Face Spoof Detection With Image Distortion Analysis", IEEE TRANSACTIONS ON INFORMATION FORENSICS AND SECURITY, IEEE, PISCATAWAY, NJ, US, vol. 10, no. 4, 1 April 2015 (2015-04-01), pages 746-761, XP011575418, ISSN: 1556-6013, DOI: 10.1109/TIFS.2015.2400395 [retrieved on 2015-03-12]
- DAS DHRUBAJYOTI ET AL: "Face liveness detection based on frequency and micro-texture analysis", 2014 INTERNATIONAL CONFERENCE ON ADVANCES IN ENGINEERING & TECHNOLOGY RESEARCH (ICAETR - 2014), IEEE, 1 August 2014 (2014-08-01), pages 1-4, XP032722516, ISSN: 2347-9337, DOI: 10.1109/ICAETR.2014.7012923 [retrieved on 2015-01-16]
- Rinku Datta Rakshit ET AL: "Face Spoofing and Counter-Spoofing: A Survey of State-of-the-art", Transactions on Machine Learning and Artificial Intelligence, Vol. 5, No. 2, 9 May 2017 (2017-05-09), pages 31-73, XP055559503, DOI: 10.14738/tmlai.52.3130 Retrieved from the Internet: URL:http://sseuk.org/index.php/TMLAI/artic le/view/3130 [retrieved on 2019-02-20]

## Description

### Field of the Invention:

The present invention relates generally to anti-spoofing in face recognition for personal identification, authentication, advertisement and other security purposes. Particularly, the present invention relates to a face recognition method and system for tackling spoofing with real-time reenactment video on a high definition display and identifying customers to provide customized services and targeted advertisements.

### Background:

Face recognition has numerous security-related applications such as user identification, user authentication for online and offline resource accesses, door and gate unlocking.

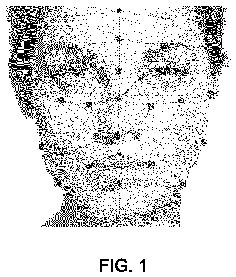

Conventionally, face recognition methods use a real-time captured image of the subject's face to find a match in a library of previously captured facial images. The face matching process is relatively accurate in comparison to other biometric identification methods with well-developed and tested facial feature analysis techniques. In general, the techniques extract characteristic data of a face region as shown in FIG. 1, which is unique for each person, from the captured image of the subject's face, and compares the characteristic data against those stored in the library, thereby matching the subject's face to that of a previously registered person.

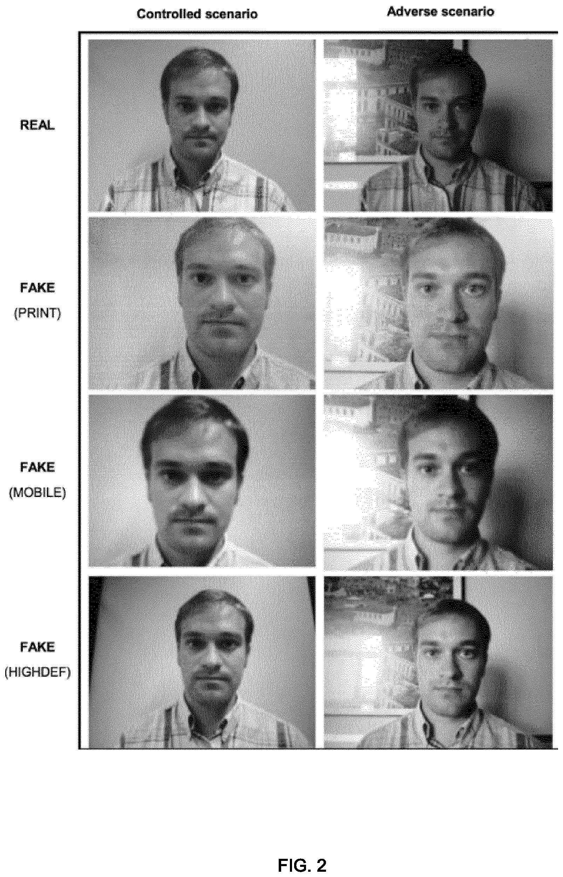

Some face recognition systems have been developed to determine whether the subject is a living person by ways of requiring the subject to make multiple facial expressions and movements during an identification session and allowing the system to detect and capture the multiple frames of facial expressions and movements for matching. For example, U.S. Patent No. 6,922,478 disclosed a method for verifying the authenticity of a captured image of a person comprising recording a sequence of consecutive individual images of the person and determining the authenticity of the recorded images by checking if at least in two consecutive individual images of the sequence intrinsic movements can be detected. However, such an authenticity verifying system may be deceived by printed photographs or an electronic display showing images of the subject to be authenticated as illustrated in FIG. 2.

Other face recognition systems have been developed to determine whether the captured face image is of a living body by ways of requiring interactive inputs from the subject to be recognized. For example, European Patent No. 1990770 disclosed a face authenticating apparatus includes a presentation pattern display unit provided at a different position from a key input unit to display an instruction for a user to input a key pattern during facial authentication; and an image capturing unit for capturing the face of the user and/or a movement of a portion of the face of the user during a portion of or the entire time from when the presentation pattern display unit displays the instruction to when the key input is completed. And from process executed by the apparatus, determine whether the captured face image is of a living person. However, the requirement for interactive inputs limits its applications, usefulness, and the types of users.

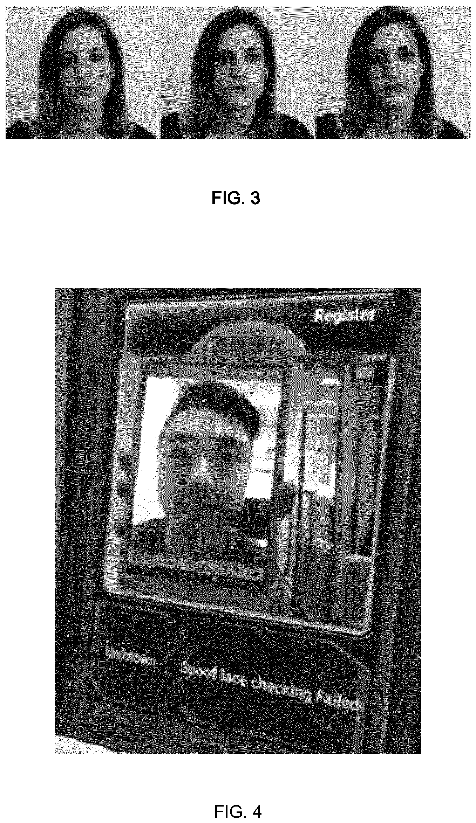

Improvements have been made to tackle the photo spoofing and facemask spoofing by ways of checking the three-dimensional (3D) perspective features of the face of the subject. For example, U.S. Patent No. 9,619,723 disclosed a process of 3D perspective check comprising collecting two or more images of the subject's face. The two or more images of the subject's face are then used to calculate the stereoscopic view data of the subject's face. However, such a face recognition system could produce false rejection if the subject maintains perfect face alignment with the camera's view center as illustrated in FIG. 3. Another example of a prior art document teaching face spoof detection by analysis of specular reflection features, blurriness features, chromatic moment features and colour diversity features is the document Di Wen et al. - "Face Spoof Detection With Image Distortion Analysis", IEEE Transactions on Information Forensics and Security, Vol. 10, No. 4, April 2015, pp. 746-761.

Many service-oriented industries strive to provide higher quality service or targeted advertising to their big-spending customers classified as very important persons (VIP) with personal attention or at least the impression of personal attention. Often, it is a challenge to a salesperson or receptionist deployed in a business premise to identify every visiting customer and recall their profiles instantly in order to provide tailor-made services to the important customers. Therefore, there is a need for a method and system to automatically identify the important customers and promptly inform staffs of their arrival and profile information such that staffs can provide just-in-time tailor-made services to them.

Face recognition has been known to be an effective way for personal identification. Traditional face recognition systems usually capture the face of a particular subject and match it with a library of previously captured facial images in a one-to-one manner for security or authentication purposes. A challenge in using face recognition systems for customer identification is that the number of customers to be identified at a particular business premise may not be known in advance. Also, it may be required to detect the presence of customers in a particular area of interest and automatically perform personal identification.

Methods and systems have been developed for automatic face recognition. For example, U.S. Patent No. 9,262,668 discloses a distant face recognition system comprising a primary and a plurality of secondary video cameras provided to monitor a detection area. The primary video camera can detect people present in the detection zone. Data can be then transmitted to a prioritizor module that produces a prioritized list of detected people. The plurality of secondary video cameras then captures a high-resolution image of the faces of the people present in the detection area according to the prioritized list provided by the prioritizor module. The high-resolution images can be then provided to a face recognition module, which is used to identify the people present in the detection area. However, such system would be very expensive to implement as it requires multiple pan-tilt-zoom (PTZ) cameras.

Other techniques have been developed to track visiting guests by face recognition, such as the method disclosed in U.S. Patent No. 8,750,576. But, the disclosed method lacks the ability to promptly notify of the status of the visiting guest via a mobile communication system. Still other techniques have been developed for providing targeted advertisements based on face clustering. For example, US Patent No. 8,769,556 discloses a method and apparatus for providing targeted advertisements based on face clustering for time-varying video. During operation, video is continuously obtained of users of the system. Users' faces are detected and measured. Measurements of users' faces are then clustered. Once the clusters are available, advertisements are targeted at the clusters rather than individual users. However, as advertisements are targeted at the clusters rather than the individual users in such type of system, the content of the targeted advertisements cannot be personalized and relating to the targeted audience at the more personal level.

### Summary of the Invention:

It is an objective of the present invention to provide a face-recognition method and system for personal identification and authentication with anti-spoofing functions capable of effectively detecting whether the subject is a living person or a high definition display of a target's face. It is a further objective of the present invention to provide a simplified method and system of personal identification and authentication that does not require interactive inputs from the subject to be recognized which might not be feasible in certain applications or for certain types of users. It is a still further objective to provide a simplified method and system of personal identification and authentication that does not require a 3D perspective test which might produce false rejection in situation where a subject perfectly aligns her face with the camera center. It is yet another objective to provide a method and system for automatic customer identification and tracking such that enhanced services and targeted advertisements can be provided to customers promptly and accurately.

The method of personal identification and authentication comprises capturing an image of a subject to be authenticated; a step of face verification; followed by the process steps of a scan line detection test, a specular reflection detection test, and a chromatic moment and color diversity feature analysis test in no particular order. The method requires a subject to present her face before a camera, which can be the built-in or peripheral camera of e.g. a mobile communication or computing device, a computer, or a stationary electronic device. The method also requires displaying to the subject certain instructions and the real-time video feedback of the subject's face on a display screen, which can be the built-in or peripheral display screen of the mobile communication or computing device, computer, or stationary electronic device.

The step of face verification is to capture an image of the subject's face in a single frame shot, then preliminarily verifying the identity of the subject by matching the single frame face image against a database of pre-recorded face data records using existing face analysis and recognition techniques.

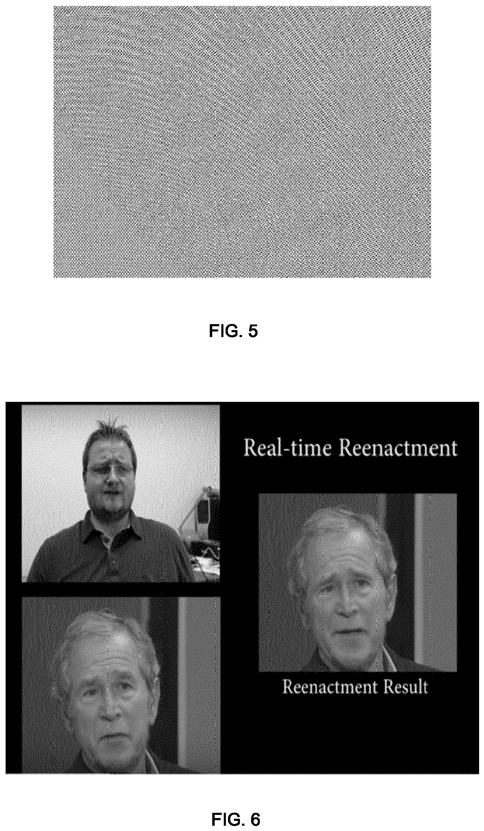

The scan line detection test is based on detecting Moiré patterns created by the overlapping of the digital grid of a spoof image from a digital media display and the grid of an image sensor of a camera in a face-recognition system. As illustrated in FIG. 6, the spoof image may be an image extracted from a pre-recorded or real-time reenactment video of a person's face displayed on a high-resolution display such as a liquid crystal display (LCD) display.

The specular reflection detection test is based on the detection of specular reflection features of spoof images displayed in photographs or digital media displays having mirror or reflective surfaces. This is based on the general phenomenon that specular reflection is more likely to happen on a photo or a digital display which are usually of mirror or reflective surfaces whereas diffuse reflection happens on a genuine human face.

The specular reflection detection test comprises extracting multi-dimensional specular reflection features from the input image wherein the extraction comprises: discarding pixels of intensities outside of pre-defined range; and classifying the extracted specular reflection features to determine whether the input image is an image of a genuine face or a spoof image. Preferably, a support vector machine (SVM) based classifier trained with certain training sets is used to classify the extracted specular reflection features.

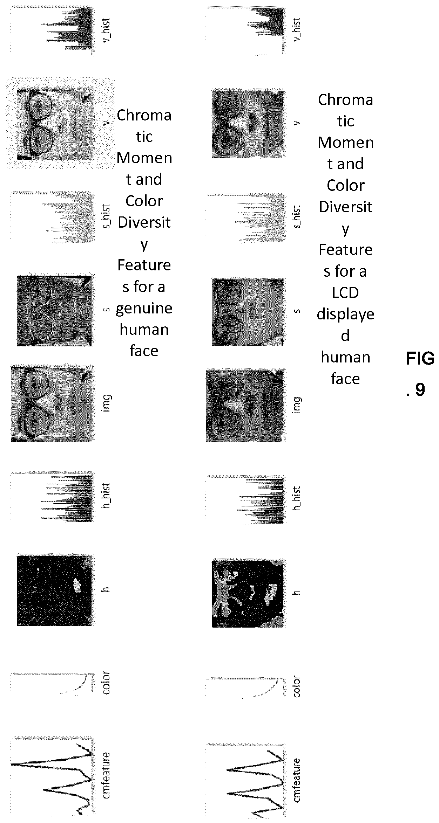

Referring to FIG. 9. The chromatic moment and color diversity feature analysis test employs a process in which the chromatic features and color histogram of a spoof image, which can be a reproduced face image shown on a printed photo or displayed by a digital media display such as a LCD display, are analyzed to see if its color diversity is reduced in comparison with an image of a genuine face. This is based on the fact that reproduced face images have different color distribution compared to color distribution of genuine faces due to imperfect color reproduction property of printing and digital display.

The chromatic moment and color diversity feature analysis test comprises extracting the chromatic features and color histogram features of the input image in both hue, saturation, and value (HSV) value space, and red, green, and blue (RGB) color space; and classifying the extracted chromatic features and color histogram features to determine whether the input image is an image of a genuine face or a spoof image. Preferably, a SVM based classifier trained with certain training sets is used to classify the extracted chromatic features and color histogram features. In general, SVM scores of greater than or equal to zero signifies a positive detection whereas a negative value signifies a rejection.

An automatic identification and tracking method is provided to identify whether a customer entering a premise, such as a shopping mall or retail store, is a previously registered or remembered customer (or VIP), retrieve profile, demographical data and/or point of sale (POS) records of the customer, track location of the customer, and send the retrieved profile and tracked location of the customer to computing devices configured to be used by sales/service staffs.

The automatic identification and tracking method further comprises displaying targeted advertisements associated with demographical data of the customer in a frontend device to the customer; detecting a plurality of sentiments of the customer watching the targeted advertisements; measuring a dwell time of watching the targeted advertisements by the customer; and performing analysis on effectiveness of targeted advertisements based on the demographic data, the detected sentiments and measured dwell time of the customer.

The automatic identification and tracking method further comprises utilizing a plurality of cameras installed at various locations in the. The various locations include, but not limited to, advertisement displays, signage devices, merchandise shelves, display counters, entrances, and exits. Once a customer is first captured by one of the cameras, regardless of whether she is previously identified and whether she has been previously registered, the customer is assigned a temporary unique identifier. The customer is tracked by the plurality of cameras as she roams around the premise with information including path of movement and dwell time at each location recorded. This information is then sent to computing devices configured to be used by sales/service staffs, and analyzed for the customer's interests in goods and services and shopping preferences. Consequently, the staffs can make use of the analysis results to better market goods and services, and provide a personalized shopping experience to each customer.

### Brief Description of the Drawings:

Embodiments of the invention are described in more detail hereinafter with reference to the drawings, in which:
FIG. 1 illustrates how characteristic data are extracted from a face region in a general face recognition system;
FIG. 2 illustrates examples of a printed photograph or an electronic display showing images of a target's face to be authenticated which may be used to deceive a face recognition system;
FIG. 3 illustrates a scenario where a subject maintains perfect face alignment with the camera center causing a face recognition system to produce a false rejection;
FIG. 4 shows an exemplary user interface of a face verification apparatus in accordance to an embodiment of the present invention;
FIG. 5 shows the Moiré patterns created by the overlapping of the digital grid of an image from a digital media display and the grid of an image sensor of a camera;
FIG. 6 shows the images extracted from a pre-recorded or real-time reenactment video of the person;
FIG. 7a illustrates the frequency domain of a spoof image captured from a LCD display; FIG. 7b illustrates the frequency domain of an image captured from a person;
FIG. 8 illustrates the principle of the specular reflection detection test in accordance to an embodiment of the present invention;
FIG. 9 illustrates the principle of the chromatic moment and color diversity feature analysis test in accordance to an embodiment of the present invention;
FIG. 10 depicts a process of face recognition method of personal identification and authentication with anti-spoofing functions in accordance to one embodiment of the present invention;
FIG. 11 depicts the process steps of the scan line detection test in accordance to an embodiment of the present invention;
FIG. 12 illustrates a flowchart of an automatic identification and tracking method in one embodiment of the present invention; and
FIG. 13 illustrates an automatic identification and tracking system in one embodiment of the present invention.

### Detailed Description:

In the following description, face recognition methods and systems for personal identification and authentication with anti-spoofing functions, the methods and systems for automatic customer identification and tracking and the likes are set forth as preferred examples.

The face recognition system can be implemented in a mobile communication device (e.g. "smartphone" and personal digital assistant), a mobile or personal computing device (e.g. "tablet" computer, laptop computer, and personal computer), a kiosk, or a user terminal having a built-in or peripheral camera and an electronic display screen.

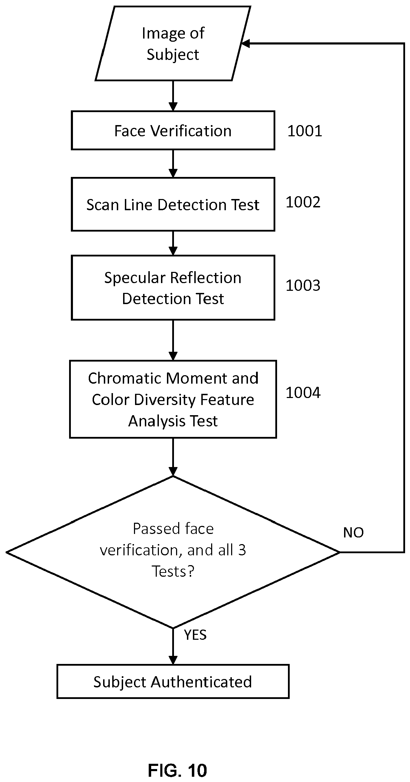

Referring to FIG. 10. The face recognition method comprises capturing an input image of an subject to be authenticated; conducting face verification 1001 to verify the identity of the subject by matching the input image against a database of pre-recorded face data records using a face analysis and recognition method, which can be based on presently available techniques; conducting anti-spoofing tests including a scan line detection test 1002, a specular reflection detection test 1003, and a chromatic moment and color diversity feature analysis test 1004. Although the steps 1002, 1003, and 1004 are performed in the order as presented in FIG. 10, other ordering are also possible without departing from the scope of the present invention. The method requires a subject to present her face before a camera, which can be the built-in or peripheral camera of e.g. a mobile communication or computing device, a computer, or a stationary electronic device. The method also requires displaying to the subject certain instructions and the real-time video feedback of the subject's face on a display screen, which can be the built-in or peripheral display screen of the mobile communication or computing device, computer, or stationary electronic device.

The step of face verification is to capture an image of the subject's face in a single frame shot, then preliminarily verifying the identity of the subject by matching the single frame face image against a database of pre-recorded face data records using existing face analysis and recognition techniques. FIG. 4 shows an exemplary user interface of a face verification apparatus in accordance to an embodiment of the present invention.

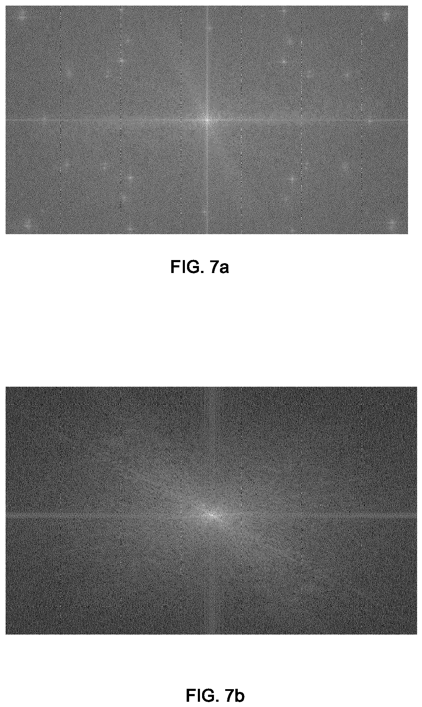

The scan line detection test is to detect Moiré patterns, as shown in FIG. 5, created by the overlapping of the digital grid from a digital media display and the grid of the image sensor of the camera in the face-recognition system to determine whether the input image is a spoof image provided with a digital media display such as LCD display. As shown in FIGs. 7a and 7b, peaks can be found in frequency domain of a spoof image captured from a LCD display due to the Moiré patterns whereas no peaks are found in frequency domain of an image captured from a living person.

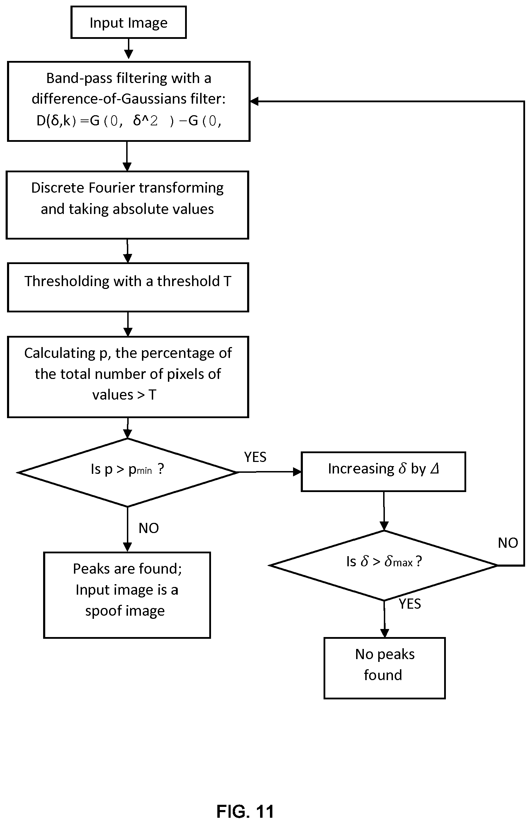

Referring to FIG. 11, the scan line detection test comprises the following steps:
a) applying band-pass filtering on the input image, I, with a difference-of-Gaussians filter: D(δ,k)=G(0, δ^2)-G(0, kδ^2) to generate a band-pass-filtered image: Γ=I^{∗}D(δ, k) where G(0,δ^2) is a 2D-Gaussian function with zero mean and a standard deviation δ and k is the width of frequency band;
b) converting the filtered image into frequency domain: H = |DFT (Γ)|, by performing a Discrete Fourier Transform (DFT) and taking absolute values on the outputs;
c) applying thresholding on the filtered image H in frequency domain with a threshold T;
d) counting the number of pixels of the filtered image in frequency domain with values higher than the threshold T and calculating the percentage p of the total number of pixels in the input image with values higher than the threshold T; and
e) determining that peaks exist in the filtered image in frequency domain and the input image is a spoof image if p≤ p*ₘᵢₙ*, where *pₘᵢₙ* is a pre-defined minimum value of percentage of the total number of pixels in the input image.

The scan line detection test further comprises increasing the standard deviation δ by an increment of Δ if p> p*ₘᵢₙ*; repeating the afore-said steps from applying band-pass filtering to determining existence of peaks if δ≤ δ*ₘₐₓ*, where δ*ₘₐₓ* is a pre-defined maximum value of δ; and determining that no peaks exist in the input image if δ>δ*ₘₐₓ.*

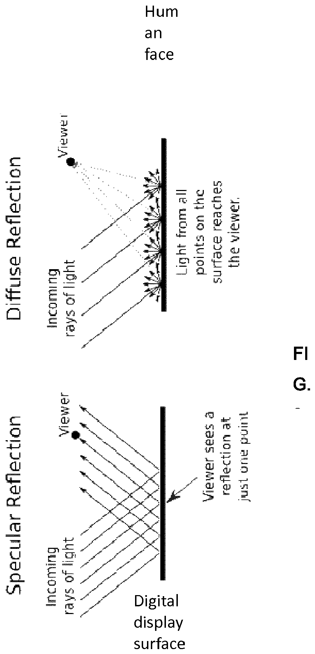

Referring to FIG. 8. The specular reflection detection test is to detect specular reflection features of a mirror or reflective surface to determine whether the input image is a spoof image provided with a photograph or a digital media display. The specular reflection detection test is based on the detection of specular reflection features of spoof images displayed in photographs or digital media displays having mirror or reflective surfaces. This is based on the fact that specular reflection is more likely to happen on a photo or a digital display which are usually of mirror or reflective surfaces whereas diffuse reflection happens on a genuine human face.

The specular reflective component is extracted from the input image. The process involves separating the reflective component versus the diffuse component based on their chromaticity variation under varying light intensity. For diffuse color, the chromaticity stays constant. The specular reflection detection test then comprises: extracting multi-dimensional specular reflection features from the input image, wherein the specular reflective features comprise a specular pixel percentage, an intensity value, and a variation of the pixels; discarding one or more pixels of intensities outside of a pre-defined intensity range (e.g. discarding the one or more pixels with intensities outside of the range [1µ, 5µ], where µ is the mean pixel intensity value); classifying, using machine learning techniques, the extracted specular reflection features to determine whether the input image is a spoof image. Preferably, a SVM based classifier trained with certain training sets is used to classify the extracted specular reflection features. During training, the SVM based classifier is given a number, e.g. thousands, of sample specular reflection features each marked as belonging to either genuine image category or spoof image category for building a model that can classify new examples to the one category or the other (e.g. classification result >= 0) or the other (e.g. classification result < 0).

The chromatic moment and color diversity feature analysis is based on the general phenomenon of that reproduced face images have a different color distribution than that of genuine face images that is caused by imperfect color reproduction property of printing and digital displays. In addition, color diversity is also reduced in reproduced face images whereas genuine face images generally have richer colors. The chromatic moment and color diversity feature analysis test is to detect if the color diversity of the input image is reduced in order to determine whether the input image is a spoof image provided with a print photograph or a digital media display.

The chromatic moment and color diversity feature analysis comprises extracting the chromatic features and color histogram features of the input image in both HSV and RGB spaces; classifying, using machine learning techniques, the extracted chromatic features and color histogram features to determine whether the input image is a spoof image. Preferably, a SVM based classifier trained with certain training sets is used to classify the extracted chromatic features and color histogram features. During training, the SVM based classifier is given a number, e.g. thousands, of sample chromatic features and color histogram features each marked as belonging to either genuine image category or spoof image category for building a model that can classify new examples to the one category (e.g. classification result >= 0) or the other (e.g. classification result < 0).

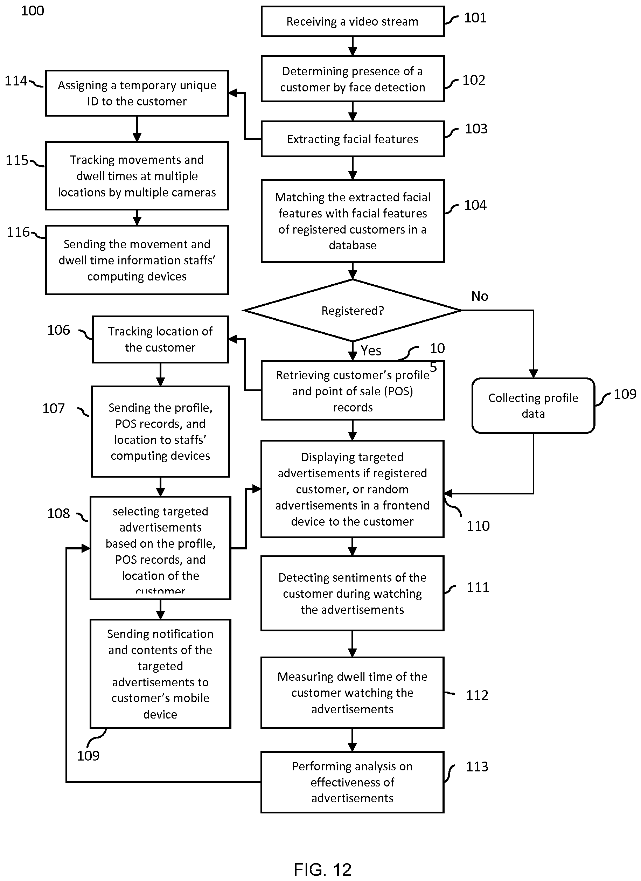

The face recognition methods and systems can be incorporated in automatic identification and tracking methods and systems. A flowchart of an automatic identification and tracking method 100 in accordance to one embodiment is depicted in FIG. 12. The automatic identification and tracking method comprises Step 101: receiving a video stream from a camera installed in a premise, such as a shopping mall or retail store; Step 102: determining presence of a customer by face detection in the video stream; Step 103: extracting facial features of the customer; Step 104: matching the extracted facial features of the customer with previously registered customers' facial feature records in a database to determine whether the customer is registered customer (a VIP or a regular customer); Step 105: retrieving profile, which includes, but not limited to, demographical data, and POS records (e.g. including purchase history) of the customer if the customer is previously registered; Step 106: tracking location of the customer based on the location of the camera; Step 107: sending the retrieved profile, POS records, and tracked location of the customer to one or more computing devices configured to be used by sales/service staffs; Step 108: selecting from a plurality of pre-defined advertisements one or more targeted advertisements based on the retrieved profile, POS records, and tracked location of the customer; and Step 109: sending notification and contents of the targeted advertisements to a mobile communication device of the customer.

The selection of targeted advertisements can be based on the featured products/services in the targeted advertisements that are determined to be relevant to one or more of the retrieved profile, POS records, and tracked location of the customer. For example, in the case where the demographical data indicates female in her late twenties with a recent purchase of a baby stroller and a tracked location of infant food section of the store, a selection of targeted advertisements featuring baby formulas is resulted. In accordance to one embodiment, machine learning techniques are employed in targeted-advertisements selection. One such machine learning techniques makes use of historical data of POS records and profiles of a plurality of registered customers, and compares with the present customer's profile to identify similarities and patterns of purchases and in turn selects the targeted advertisements accordingly.

The aforesaid Step 102 and Step 103 are performed using the aforesaid face recognition methods and systems.

The automatic identification and tracking method further comprises Step 109: collecting the profile, including at least demographical data, of the customer if the customer is not a registered customer. In yet another embodiment, the automatic identification and tracking method further comprises Step 110: if the customer is a registered customer, displaying the targeted advertisements in a frontend device to the customer, otherwise, displaying random advertisements in the frontend device to the customer; Step 111: detecting the sentiments of the customer watching the advertisements being displayed in the frontend device; Step 112: measuring a dwell time of the customer watching the advertisements; and Step 113: determining the effectiveness of the advertisements based on the detected sentiments and measured dwell time of the customer. For example, if a pleasant sentiment, i.e. physical display of positive emotions (including smile, laugh, giggle, and neutral emotion), is detected when a particular advertisement, type of advertisement, or advertisement of certain product or service is on display, the advertisement is considered to be effective. For another example, if the measured dwell time for a particular advertisement, type of advertisement, or advertisement of certain product or service on display is longer than a threshold dwell time (e.g. 10 seconds), the advertisement is considered to be effective; otherwise ineffective. For still another example, if an unpleasant sentiment, i.e. physical display of distasteful emotions (including frown and indifferent emotion) is detected when a particular advertisement, type of advertisement, or advertisement of certain product or service is on display, the advertisement is considered to be ineffective.

Therefore, the effectiveness of an advertisement to a customer is a function of detected sentiments and dwell time of the customer, which can be represented by:
E[Advertisement 1] = f (sentiments, dwell time)

The advertisement effectiveness information associated with the customer are recorded. Subsequent selection of targeted advertisements can then be based on the historical records of effectiveness information of types of advertisement and/or advertisement of certain products or services in addition to the retrieved profile, POS records, and tracked location of the customer.

In accordance to another aspect, the automatic identification and tracking method further comprises utilizing a plurality of cameras installed at various locations in the premise. The various locations include, but not limited to, advertisement displays, signage devices, merchandise shelves, display counters, entrances, and exits. Once a customer is first captured by one of the cameras in Step 102 and her facial features extracted in Step 103, regardless of whether or not she is previously identified or registered, the customer is assigned a temporary unique identifier in Step 114. The customer is tracked by the plurality of cameras as she roams around the premise with information including path of movement and dwell time at each location recorded in Step 115. This information is then sent to the one or more computing devices configured to be used by sales/service staffs, and analyzed for the customer's interests in goods and services and shopping preferences in Step 116. Consequently, the staffs can make use of the analysis results to better market goods and services, and provide a personalized shopping experience to each customer.

The automatic identification and tracking method preferably comprises dynamically controlling the lighting for capturing of the video streams by the digital video cameras so as to maintain high face recognition accuracy.

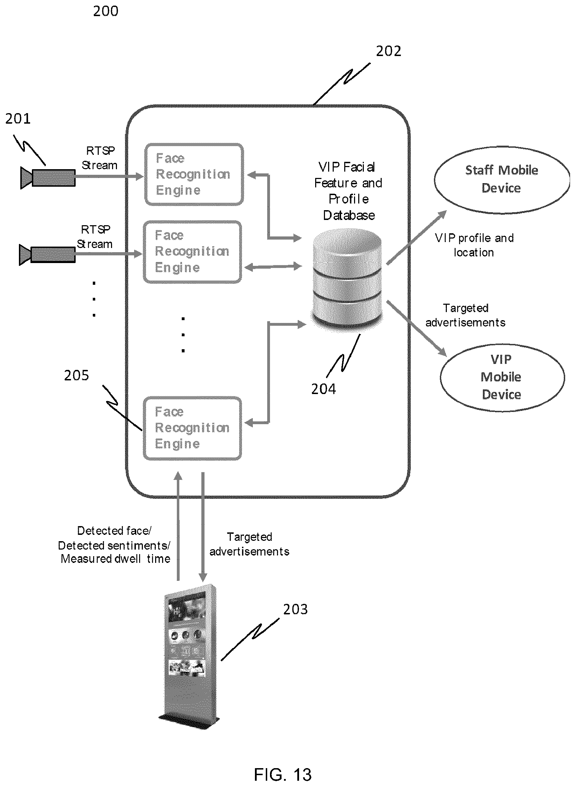

Referring to FIG. 13. In one embodiment, an automatic identification and tracking system 200 comprises at least one camera 201 for capturing video streams; an identification and tracking server 202 for identifying whether a customer is a registered customer (a VIP or a regular customer), retrieving profile, including demographical data, and POS records (e.g. including purchase history) of the customer, tracking location of the customer, and sending the retrieved profile and tracked location of the customer to a plurality of computing devices configured to be used by sales/service staffs; and at least one frontend device 203 for displaying a plurality of advertisements to the customer, collecting profile, including at least demographical data, of the customer through a user interface, which can be a graphical user interface displayed in an electronic touch screen of the frontend device 203. The identification and tracking server 202, working in conjunction with camera 201, is further configured for capturing and detecting sentiments of the customer watching the advertisements, measuring a dwell time of watching the advertisements by the customer, and performing analysis on effectiveness of the advertisements from the detected sentiments and measured dwell times. The identification and tracking server 202 comprises at least one storage media 204 for storing a database of facial features, demographical data, profiles, and types (e.g. VIP or regular) of registered customers, recorded sentiments and dwell times of the customers with references to the advertisements watched by the customers, and the associated advertisement effectiveness analysis results; at least one face recognition engine 205 for determining presence of customer, extracting facial features, matching the extracted facial features with registered customers' facial feature records in the database, detecting sentiments, meaning dwell times, and analyzing advertisement effectiveness.

The cameras 201 are built-in or peripheral cameras of the frontend devices 203. In one embodiment, the frontend devices 103 comprise at least one electronic display. In accordance to one embodiment of the present invention, the cameras 201 and the frontend devices 203 are positioned strategically at advertisement displays, merchandise shelves, display counters, entrances and exits of the premise. In accordance to one embodiment, the frontend device 203 is a signage device, such as a kiosk or an electronic billboard, having an electronic display. The computing device configured to be used by sales/service staffs can be a personal computer, laptop computer, mobile computing device such as "smartphone" and "tablet" computer, or kiosk configured to execute machine instructions that communicate with identification and tracking server 202 and render a graphical user interface to display data received from the identification and tracking server 202 to and interact with the sales/service staff. The mobile communication device of the customer can be a mobile computing device such as "smartphone" and "tablet" computer.

The face recognition system and the automatic identification and tracking system comprise at least machine instructions for rendering and controlling a graphical user interface displayed on the electronic display, machine instructions for controlling the camera for capturing images and videos, machine instructions for performing the face recognition and anti-video-spoofing algorithms, and machine instructions for performing the customer identification and tracking; wherein the machine instructions can be executed using general purpose or specialized computing devices, computer processors, or electronic circuitries including, but not limited to, digital signal processors (DSP), application specific integrated circuits (ASIC), field programmable gate arrays (FPGA), and other programmable logic devices.

The systems include computer storage media having computer instructions or software codes stored therein which can be used to program computers or microprocessors to perform any of the processes of the present invention. The storage media can include, but are not limited to, floppy disks, optical discs, Blu-ray Disc, DVD, CD-ROMs, and magneto-optical disks, ROMs, RAMs, flash memory devices, or any type of media or devices suitable for storing instructions, codes, and/or data.

## Claims

1. An identification and tracking system comprising:
one or more computer processors, a camera, and a storage media;
wherein the identification and tracking system is configured to:
capture an input image of a subject to be identified and authenticated with the camera;
verify identity of the subject (1001) by matching the input image against a database of pre-recorded face data records stored in the storage media;
authenticate the subject if the input image matches one of the pre-recorded face data records and the identity of the subject (1001) is verified;
if the subject is authenticated, conduct anti-spoofing tests on the input image including:
(i) a scan line detection test (1002) for detecting Moiré patterns created by an overlapping of digital grid from a digital media display and grid of the camera image sensor, wherein the input image is a spoof image if Moiré patterns are detected, wherein the detection of the Moiré patterns comprises:
a) applying band-pass filtering on the input image with a difference-of-Gaussians filter D(δ,k)=G(0, δ^2)-G(0, kδ^2) to generate a band-pass-filtered image, wherein G(0,δ^2) is a 2D-Gaussian function with zero mean and a standard deviation δ and k is the width of the frequency band;
b) converting the band-pass-filtered image into frequency domain by discrete Fourier transformation and taking absolute values on the outputs;
c) applying thresholding on the band-pass-filtered image in the frequency domain with a threshold T;
d) counting the number of pixels of the band-pass-filtered image in the frequency domain with values higher than the threshold T and calculating the percentage, p, of the total number of pixels in the input image with values higher than the threshold T;
e) determining whether high frequency peaks exist in the band-pass-filtered image in frequency domain, wherein the input image is a spoof image if p≤ p*ₘᵢₙ*, wherein p*ₘᵢₙ* is a pre-defined minimum value of percentage of the total number of pixels in the input image;
f) increasing a standard deviation δ by an increment of Δ if p> p*ₘᵢₙ*; and
g) repeating steps a) to e) if δ≤ δ*ₘₐₓ*, wherein δ*ₘₐₓ* is a pre-defined maximum value of δ;
(ii) a specular reflection detection test (1003) for detecting one or more specular reflection features of a mirror or reflective surface from the input image, wherein the input image is a spoof image if one or more specular reflection features of a mirror or reflective surface are detected; and
(iii) a chromatic moment and color diversity feature analysis test (1004), wherein the color diversity of the input image is analyzed to determine whether the input image is a spoof image; and
wherein the chromatic moment and color diversity analysis (1004) comprises:
extracting the chromatic features and color histogram features from the input image in both HSV and RGB spaces; and
classifying the extracted chromatic features and color histogram features to determine whether the input image is a spoof image; considering that the subject is authentic if all the tests (i), (ii) and (iii) are passed.

2. The system of claim 1, wherein the specular reflection detection test comprises steps:
extracting multi-dimensional specular reflection features from the input image;
discarding pixels of intensities outside of a pre-defined range; and
classifying the extracted specular reflection features to determine whether the input image is a spoof image.

3. The system of claim 2, wherein the pre-defined range is from one times a mean value of the pixels' intensities to five times the mean value.

4. The system of claim 1, further configured to:
record a first dwell time of watching an advertisement displayed to the authenticated subject by continuously capturing images of the authenticated subject;
extract one or more facial features of the authenticated subject from the captured images;
detect a sentiment of the authenticated subject based on the extracted facial features of the authenticated subject;
determine an effectiveness of the advertisement based on the first dwell time and the detected sentiment of the authenticated subject.

5. The system of claim 4, further configured to:
track one or more locations of the authenticated subject based on locations of the one or more cameras recording video streams having the authenticated subject's presence;
measure a second dwell time of the authenticated subject staying in each of the locations of the customer;
determine the authenticated subject's interests in goods and services and shopping preferences based on each of the second dwell times; and
send the authenticated subject's interests in goods and services and shopping preferences to one or more mobile devices configured to be used by users of the identification and tracking system.

6. The system of claim 4, further configured to:
retrieve a profile data and one or more POS records of the authenticated subject from the storage media;
retrieve one or more profile data and POS records of others from the storage media;
compare the profile data of authenticated subject and the one or more profile data of the others to determine a similarity and identify a pattern of purchases based on the similarity;
select one or more targeted advertisements from a plurality of pre-defined advertisements based on the retrieved POS records of the authenticated subject, the identified pattern of purchases, and the determined effectiveness of the advertisement.

## Patentansprüche

1. Ein Identifizierungs- und Verfolgungssystem, das Folgendes umfasst:
Einen oder mehr Computer-Prozessoren, eine Kamera und Speichermedien;
wobei das Identifizierungs- und Verfolgungssystem ausgebildet ist, um:
ein Eingabebild einer zu identifizierenden und mit der Kamera zu authentifizierenden Person erfassen;
die Identität der Person (1001) mittels Vergleich des Eingabebildes mit einer Datenbank mit vorgespeicherten Gesichtsdatenaufzeichnungen zu überprüfen, die in den Speichermedien gespeichert sind;
die Person zu authentifizieren, wenn das Eingabebild mit einem der vorgespeicherten übereinstimmt und die Identität der Person (1001) überprüft wurde ;
wenn die Person authentifiziert wurde, Anti-Spoofing-Tests des Eingabebildes durchzuführen, einschliesslich:
(i) Ein Abtastzeilenerkennungstest (1002) zum Erkennen der Moiremusters, das durch Überlappung eines Digitalrasters einer Digitalmedienanzeige und eines Rasters des Bildsensors der Kamera erstellt wird, wobei das Eingabebild ein Spoof-Bild ist, wenn die Moiremuster erkannt wurden,
wobei die Erkennung der Moiremuster Folgendes umfasst:
a) Anwendung einer Bandpassfilterung des Eingabebildes mit einem Gaussfunktionendifferenzfilter D(δ,k)=G(0,δ^2)-G(0,kδ^2), um ein Bandpassfilterbild zu bilden, bei dem (G(0,δ^2) eine 2D-Gauss-Funktion mit Mittelwerten Null ist und eine Standardabweichung δ und k ist die Breite des Frequenzbandes;
b) Umwandlung des Bandpassfilterbildes in einen Frequenzbereich durch eine diskrete Fourier-Transformation und unter Betrachtung von absoluten Werten an den Ausgaben;
c) Anwendung von Schwellenwerten am Bandpassfilterbild im Frequenzbereich mit einem Schwellenwert T;
d) Zählen der Pixelanzahl des Bandpassilterbildes im Frequenzbereich mit Werten, die über dem Schwellenwert T liegen und Berechnung des Prozentsatzes p der gesamten Pixlelanzahl in dem Eingabebild mit Werten, die über dem Schwellenwert T liegen;
e) Feststellung, ob Hochfrequenzspitzen in dem Bandpassfilterbild im Frequenzbereich vorhanden sind, wobei das Eingabebild ein Spoof-Bild ist wenn p≤ p*ₘᵢₙ*, wobei p*ₘᵢₙ* ein vorbestimmter Mindestwert des Prozentsatzes der gesamten Pixelanzahl im Eingabebild ist;
f) Steigerung einer Standardabweichnung δ durch eine Erhöhung von Δ, wenn p> p*ₘᵢₙ*, und
g) Wiederholung der Schritte a) bis e), wenn δ≤ δ*ₘₐₓ*, wobei δ*ₘₐₓ* ein vorbestimmter Höchstwert von δ ist.
(ii) Ein Spiegelungstest (1003) zur Feststellung einer oder mehr Spiegelungseigenschaften eines Spiegels oder einer reflektierenden Oberfläche aus dem Eingabebild, wobei das Eingabebild ein Spoof-Bild ist, wenn eine oder mehr Spiegelungseigenschaften eines Spiegels oder einer reflektierenden Oberfläche festgestellt werden; und
(iii) Ein Analysentest (1004) der Eigenschaften des chromatischen Moments und der Farbvielfalt, wobei die Farbvielfalt des Eingabebildes analysiert wird, um zu bestimmen, ob das Eingabebild ein Spoof-Bild ist; und
Wobei die Analyse (1004) des chromatischen Moments und der Farbvielfalt Folgendes umfasst:
Extraktion der chromatischen Eigenschaften und Eigenschaften des Farbhistogramms aus dem Eingabebild sowohl im HSV- als auch RGB-Farbraum, und
Einstufung der extrahierten chromatischen Eigenschaften und Eigenschaften des Farbhistogramms zwecks Bestimmung, ob das Eingabebild ein Spoof-Bild ist;
davon ausgehend, dass die Person authentisch ist, wenn alle Tests (i), (ii) und (iii) erfolgreich waren.

2. Das System gemäss Anspruch 1, wobei der Feststellungstest der Spiegelung folgende Schritte umfasst:
Extraktion der multidimensionalen Spiegelungseigenschaften aus dem Eingabebild;
Verwerfung der Pixels mit einer Intensität ausserhalb eines vorbestimmten Bereiches; und
Einstufung der extrahierten Spiegelungseigenschaften zwecks Bestimmung, ob das Eingabebild ein Spoof-Bild ist.

3. Das System gemäss Anspruch 2, wobei der vorbestimmte Bereich einmal ein Durchschnittswert der Intensität der Pixel bis zu fünfmal der Durchschnittswert ist.

4. Das System gemäss Anspruch 1, das weiterhin ausgestaltet ist, um:
Eine erste Verweilzeit zu registrieren und zwar zur Beobachtung einer der authentifizierten Person gezeigten Anzeige, indem fortlaufend Bilder der authentifizierten Person eingefangen werden;
Eine Extraktion von einem oder mehr Gesichtszügen der authentifizierten Person aus den eingefangenen Bildern durchzuführen;
Ein Gefühl der authentifizierten Person basierend auf den extrahierten Gesichtszügen der authentifizierten Person festzustellen;
Eine Wirksamkeit der Anzeige zu bestimmen basierend auf der ersten Verweilzeit und dem festgestellten Gefühl der authentifizierten Person.

5. Das System gemäss Anspruch 4, das weiter ausgestaltet ist, um:
Eine oder mehr Standorte der authentifizierten Person zu verfolgen, basierend auf den Standorten der einen oder mehreren Kameras, die Video-Streams mit der Gegenwart der authentfizierten Person registrieren;
Eine zweite Verweilzeit der authentifizierten Person zu messen, die an jedem der Standorte des Kunden verweilt;
Das Interesse der authentifizierten Person an Gütern und Dienstleistungen sowie Einkaufspräferenzen zu bestimmen, und zwar basierend auf jeder der zweiten Verweilzeiten; und
Das Interesse der authentifizierten Person an Gütern und Dienstleistungen sowie Einkaufspräferenzen an ein oder mehrere mobile Geräte zu senden, die zum Gebrauch der Benutzer des Identifizierungs- und Verfolgungssystem konfiguriert sind.

6. Das System gemäss Anspruch 4, das weiter ausgestaltet ist, um:
Profildaten und einen oder mehr POS-Datensätze der authentifizierten Person aus den Speichermedien abzurufen;
Einen oder mehr Profildaten und POS-Datensätze Anderer aus den Speichermedien abzurufen;
Die Profildaten der authentifizierten Person und ein oder mehr Profildaten der Anderen zu vergleichen, um eine Ähnlichkeit zu bestimmen und ein Einkaufsverhalten basierend auf der Ähnlichkeit zu identifizieren.
Eine oder mehr gezielte Anzeigen aus einer Mehrzahl von vorbestimmten Anzeigen zu wählen und zwar basierend auf den abgerufenen POS-Datensätzen der authentifizierten Person, den identifizierten Einkaufsverhalten und der bestimmten Wirksamkeit der Anzeigen.

## Revendications

1. Un système d'identification et de repérage comprenant :
un ou plusieurs processeurs informatiques, une caméra et un dispositif de stockage ; où le système d'identification et de repérage est configuré de manière à :
capter une image entrante d'une personne à identifier et à authentifier avec la caméra ;
vérifier l'identité de la personne (1001) par le couplage de l'image entrante à la base de données contenant des registres de données du visage préenregistrées dans le dispositif de stockage ;
authentifier la personne si l'image entrante correspond à l'un des registres de données du visage préenregistrées, et l'identité de la personne (1001) est vérifiée ;
si la personne est authentifiée, il faut effectuer des tests anti-fraude de l'image entrante, comprenant :
(i) un test de détection de lignes de balayage (1002) pour détecter les effets de moiré crées par la superposition d'un quadrillage numérique d'un écran de dispositif numérique et un quadrillage du capteur d'images de la caméra, où l'image entrante sera une image fraudée si on détecte les effets de moiré, où la détection des effets de moiré comprend les étapes suivantes:
(a) appliquer un filtrage passe-bande sur l'image entrante avec une différence de filtre Gaussien D(δ,k)= G(δ^2)-G(0,k δ^2) afin de générer une image avec filtrage passe-bande, où G(0, δ^2) est une fonction gaussienne 2D de moyenne zéro et un écart standard δ, et k est la largeur de la bande de fréquence ;
(b) convertir l'image filtrée par passe-bande à domaine fréquentiel au moyen d'une transformation de Fourier discrète et prendre des valeurs absolues sur les résultats ;
c) appliquer un seuil à l'image filtrée par passe-bande dans le domaine fréquentiel avec un seuil *T* ;
d) compter le nombre de pixels de l'image filtrée par passe-bande dans le domaine fréquentiel avec des valeurs supérieures au seuil *T* et calculer le pourcentage *p* du nombre total de pixels de l'image entrante avec des valeurs supérieures au seuil *T* ;
e) déterminer s'il existe des hauts pics de fréquence dans l'image filtrée par passe bande dans le domaine fréquentiel, où l'image entrante sera une image fraudée si *p* ≤ pₘᵢₙ, où pₘᵢₙ est une valeur minimale prédéfinie du pourcentage du nombre total de pixels de l'image entrante ;
f) augmenter un écart standard δ d'une hausse de Δ si *p* < pₘᵢₙ; et
g) répéter les étapes a) à e) si δ≥ δₘₐₓ, où δₘₐₓ est une valeur maximale prédéfinie de δ ;
(ii) un test de détection de la réflexion spéculaire (1003) pour détecter une ou plusieurs caractéristiques de réflexion spéculaire d'un miroir ou d'une surface réfléchissante de l'image entrante, où l'image entrante est une image fraudée si on détecte une ou plusieurs caractéristiques de réflexion spéculaire d'un miroir ou d'une surface réfléchissante ; et
(iii) un test d'analyse des caractéristiques de diversité des couleurs et du moment chromatique (1004) où la diversité des couleurs de l'image entrante est analysée afin de déterminer si l'image entrante est une image fraudée ; et
où l'analyse de la diversité des couleurs et du moment chromatique (1004) comprend :
l'extraction des caractéristiques chromatiques et les caractéristiques d'un histogramme couleur d'une image entrante dans les deux espaces HSV et RGB ; et
la classification des caractéristiques chromatiques et les caractéristiques de l'histogramme couleur qui ont été extraites pour déterminer si l'image entrante est une image fraudée ; en considérant que l'image de la personne est authentique si tous les tests (i), (ii) et (iii) réussissent.

2. Le système de la revendication 1, où le test de détection de la réflexion spéculaire comprend les étapes suivantes :
extraire de l'image entrante les caractéristiques de réflexion spéculaire multidimensionnelle ;
exclure les pixels ayant une intensité en dehors de l'intervalle prédéfini ; et
classifier les caractéristiques de réflexion spéculaire extraites afin de déterminer si l'image entrante est une image fraudée ;

3. Le système de la revendication 2, où l'intervalle prédéfini se situe entre une fois la valeur moyenne des intensités des pixels et 5 fois la valeur moyenne.

4. Le système de la revendication 1, configuré en outre de manière à :
enregistrer une première durée de temporisation pendant laquelle la personne authentifiée regarde une annonce publicitaire affichée, en captant continuellement des images de ladite personne authentifiée ;
extraire une ou plusieurs caractéristiques faciales de la personne authentifiée des images captées ;
détecter une perception de la personne authentifiée en fonction des caractéristiques faciales extraites de ladite personne authentifiée ;
déterminer l'efficacité de l'annonce publicitaire basée sur la première durée de temporisation et la perception détectée de la personne authentifiée.

5. Le système de la revendication 4, configuré en outre de manière à :
faire le repérage d'un ou plusieurs lieux de la personne authentifiée en fonction de la position d'une ou plusieurs caméras qui enregistrent des flux vidéo qui contiennent la présence de la personne authentifiée ;
mesurer une deuxième durée de temporisation de la personne authentifiée qui demeure dans chaque lieu du client ;
déterminer les intérêts de la personne authentifiée pour les biens et les services et les préférences d'achat en fonction de la deuxième durée de temporisation ; et
envoyer les intérêts de la personne authentifié pour les biens et les services et les préférences d'achat à un ou plusieurs dispositifs mobiles configurés pour être utilisés par les usagers du système d'identification et de repérage.

6. Le système de la revendication 4, configuré en outre de manière à :
récupérer des dispositifs de stockage les données du profil et un ou plusieurs registres TPV de la personne authentifiée ;
récupérer des dispositifs de stockage les données d'un ou plusieurs profils et les registres TPV d'autres personnes ;
comparer les données du profil de la personne authentifiée et un ou plusieurs données des profils d'autres personnes afin de déterminer la similitude et identifier un modèle de comportement d'achat en fonction de ladite similitude ;
sélectionner un ou plusieurs annonces publicitaires ciblées parmi une pluralité d'annonces prédéfinies en fonction des registres TPV récupérés de la personne authentifiée, le modèle de comportement d'achat identifié et l'efficacité déterminée de l'annonce publicitaire.
